(19) Europäisches Patentamt / European Patent Office / Office européen des brevets

(11) **EP 4 382 261 A1**

(12) **EUROPEAN PATENT APPLICATION**
published in accordance with Art. 153(4) EPC

(43) Date of publication:
**12.06.2024 Bulletin 2024/24**

(21) Application number: **22853158.8**

(22) Date of filing: **04.08.2022**

(51) International Patent Classification (IPC):
**B25J 9/10** (2006.01)     **B25J 13/08** (2006.01)
**G05B 19/19** (2006.01)     **G05B 19/404** (2006.01)
**G05B 19/4061** (2006.01)

(52) Cooperative Patent Classification (CPC):
**B25J 9/10; B25J 13/08; G05B 19/19;
G05B 19/404; G05B 19/4061**

(86) International application number:
**PCT/JP2022/030011**

(87) International publication number:
**WO 2023/013740 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2021 JP 2021128475**

(71) Applicant: **Kyocera Corporation
Kyoto-shi Kyoto 612-8501 (JP)**

(72) Inventors:
• **GRACIA, Fidelia
Kyoto-shi, Kyoto 612-8501 (JP)**
• **MORI, Masato
Kyoto-shi, Kyoto 612-8501 (JP)**
• **UCHITAKE, Masahiro
Kyoto-shi, Kyoto 612-8501 (JP)**
• **ISHIDA, Takayuki
Kyoto-shi, Kyoto 612-8501 (JP)**

(74) Representative: **TBK
Bavariaring 4-6
80336 München (DE)**

(54) **ROBOT CONTROL DEVICE, ROBOT CONTROL SYSTEM, AND ROBOT CONTROL METHOD**

(57)     A robot control device includes a controller. The controller obtains an actual visual field size of a space information acquisition unit configured to capture an image of an operating space of a robot and space information obtained by the space information acquisition unit, sets a predetermined first position based on the actual visual field size and the space information, and generates a calibration position of the robot based on the first position and the actual visual field size.

FIG. 1

EP 4 382 261 A1

## Description

CROSS-REFERENCE TO RELATED APPLICATIONS

This application claims priority of Japanese Patent Application No. 2021-128475 (filed August 4, 2021), the entire contents of which are incorporated herein for reference.

TECHNICAL FIELD

The present disclosure relates to a robot control device, a robot control system, and a robot control method.

BACKGROUND OF INVENTION

In a known device, a calibration range is previously set on the basis of an image coordinate system (see, for example, Patent Literature 1).

CITATION LIST

PATENT LITERATURE

Patent Literature 1: Japanese Unexamined Patent Application Publication No. 2018-111166

SUMMARY

According to an embodiment of the present disclosure, a robot control device includes a controller configured to control a robot. The controller obtains an actual visual field size of a space information acquisition unit configured to capture an image of an operating space of the robot and space information obtained by the space information acquisition unit. The controller sets a predetermined first position based on the actual visual field size and the space information. The controller generates a calibration position of the robot based on the first position and the actual visual field size.

According to an embodiment of the present disclosure, a robot control system includes the above-described robot control device, robot, and space information acquisition unit.

According to an embodiment of the present disclosure, a robot control method includes obtaining, by a controller configured to control a robot, an actual visual field size of a space information acquisition unit configured to capture an image of an operating space of the robot and the image captured by the space information acquisition unit. The robot control method includes setting, by the controller, a predetermined first position based on the actual visual field size of the space information acquisition unit and the image captured by the space information acquisition unit. The robot control method includes generating, by the controller, a calibration position of the robot based on the first position and the actual visual field size of the space information acquisition unit.

BRIEF DESCRIPTION OF THE DRAWINGS

FIG. 1 is a block diagram illustrating an example of configuration of a robot control system according to an embodiment.
FIG. 2 is a schematic view illustrating the example of configuration of the robot control system according to the embodiment.
FIG. 3 is a schematic view illustrating an example of an FOV (Field of View) of a space information acquisition unit.
FIG. 4 is a schematic view illustrating an example of candidate positions.
FIG. 5 is a flowchart representing an example of procedures of a robot control method according to an embodiment.

DESCRIPTION OF EMBODIMENTS

Laborious work, such as visual recognition, is required to set a calibration range while avoiding a zone within an operating range of a robot in which zone the robot cannot operate. Simpler setting of the calibration range is demanded. The calibration range can be simply set by a robot control device, a robot control system, and a robot control method according to embodiments of the present disclosure.

(Outline of Robot Control System 1)

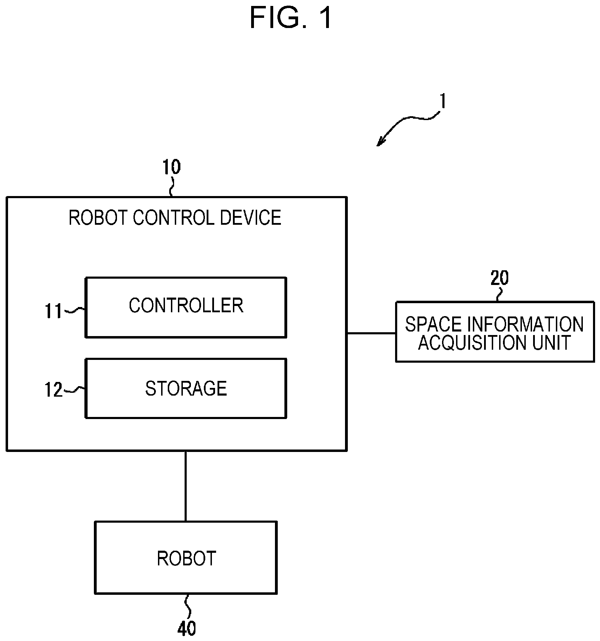

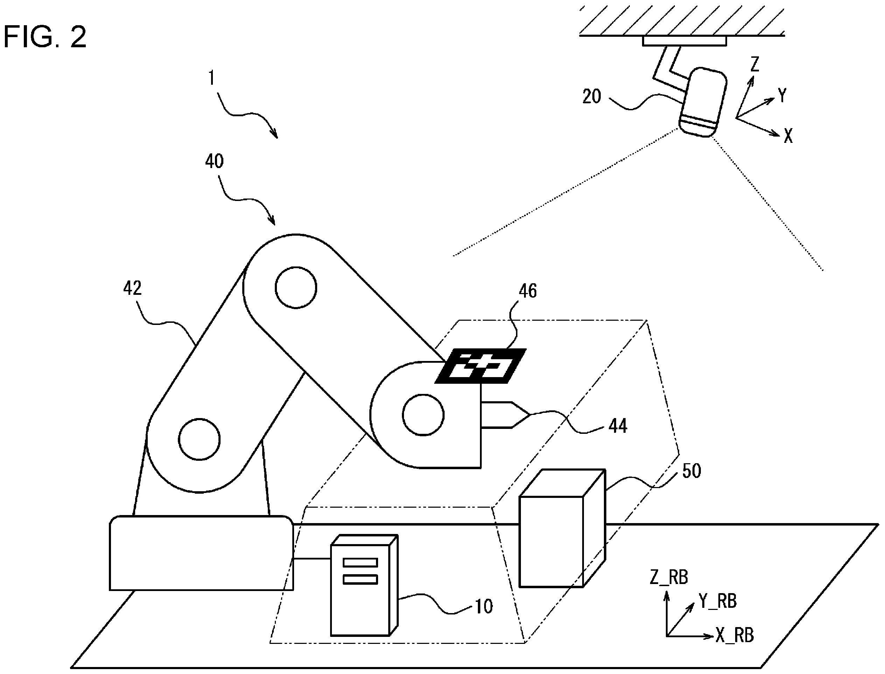

According to the embodiment, as illustrated in FIG. 1 and FIG. 2, the robot control system 1 includes a robot 40, a robot control device 10, and a space information acquisition unit 20. The robot 40 operates in a predetermined operating space. The space information acquisition unit 20 generates depth information of the operating space in which the robot 40 operates. As described later, the space information acquisition unit 20 calculates a distance to a measurement point positioned on a surface of an object 50 that is present in the operating space. The distance from the space information acquisition unit 20 to the measurement point is also referred to as a "depth". The depth information indicates the depth measured for each measurement point. In other words, the depth information indicates the distance to the measurement point positioned on the surface of the object 50 present in the operating space. The depth information may be expressed as a depth map in which a direction looking from the space information acquisition unit 20 and the depth in that direction are linked with each other. The space information acquisition unit 20 generates the depth information of the operating space on the basis of an (X, Y, Z) coordinate system. The robot control device 10 operates the robot 40 in accordance with the depth information generated by the space information acquisition unit 20. The robot control device 10 operates the robot 40 on the basis of an (X_RB, Y_RB, Z_RB) coordinate system.

The (X_RB, Y_RB, Z_RB) coordinate system may be set as the same or a different coordinate system as or from the (X, Y, Z) coordinate system. When the (X_RB, Y_RB, Z_RB) coordinate system is set as a coordinate system different from the (X, Y, Z) coordinate system, the robot control device 10 uses the depth information generated on the basis of the (X, Y, Z) coordinate system after transformation into the (X_RB, Y_RB, Z_RB) coordinate system.

The number of the robots 40 and the number of the robot control devices 10 are each not limited to one as in the illustrated example and may be two or more. The number of the space information acquisition units 20 may be one for each operating space as in the illustrated example or may be two or more. Individual components will be described in detail below.

<Robot Control Device 10>

The robot control device 10 includes a controller 11 and a storage 12.

The controller 11 may include at least one processor to realize various functions of the robot control device 10. The processor can execute programs for realizing the various functions of the robot control device 10. The processor may be implemented as a single integrated circuit. The integrated circuit is also referred to as an "IC". The processor may be implemented as multiple integrated circuits and discrete circuits that are connected to be capable of communicating with one another. The processor may include a CPU (Central Processing Unit). The processor may include a DSP (Digital Signal Processor) or a GPU (Graphics Processing Unit). The processor may be implemented based on other various known techniques.

The storage 12 may include an electromagnetic storage medium such as a magnetic disk, or a memory such as a semiconductor memory or a magnetic memory. The storage 12 may be constituted as an HDD (Hard Disk Drive) or an SSD (Solid State Drive). The storage 12 stores various types of information, programs executed in the controller 11, and so on. The storage 12 may function as a work memory for the controller 11. The controller 11 may include at least part of the storage 12.

The robot control device 10 may further include a communication device capable of communicating with the space information acquisition unit 20 and the robot 40 by wire or wirelessly. The communication device may be constituted to be capable of performing communication in accordance with suitable one of communication methods based on various communication standards. The communication device can be constituted by using known communication techniques. Detailed description of hardware and so on of the communication device is omitted. Functions of the communication device may be realized with one interface or separate interfaces that are different per connection destination. The controller 11 may be constituted to be capable of communicating with the space information acquisition unit 20 and the robot 40. The controller 11 may include the communication device.

<Robot 40>

As illustrated in FIG. 2, the robot 40 includes an arm 42, an end effector 44 mounted to the arm 42, and a mark 46 attached to the end effector 44. The mark 46 may be attached to the arm 42 instead of the end effector 44.

The arm 42 may be constituted as a 6- or 7-axis vertical articulated robot. The arm 42 may be a 3- or 4-axis horizontal articulated robot or a scalar robot. The arm 42 may be a 2- or 3-axis orthogonal robot. The arm 42 may be a parallel link robot or the like. The number of axes constituting the arm 42 is not limited to the numbers mentioned above as examples.

The end effector 44 may include, for example, a grip hand capable of gripping a work target. The grip hand may have multiple fingers. The number of the fingers of the grip hand may be two or more. The fingers of the grip hand may each include one or more joints. The end effector 44 may include an attraction hand capable of attracting the work target. The end effector 44 may include a scoop band capable of scooping the work target. The end effector 44 may include a tool, such as a drill, to be capable of performing various types of working, such as drilling to form a hole in the work target. The end effector 44 is not limited to the above-mentioned examples and may be constituted to be capable of performing various other operations.

The robot 40 can control a position of the end effector 44 by operating the arm 42. The end effector 44 may have an axis as a reference for a direction of action on the work target. When the end effector 44 has the axis, the robot 40 can control a direction of the axis of the end effector 44 by operating the arm 42. The robot 40 controls the start and the end of an operation performed by the end effector 44 to act on the work target. The robot 40 can move the work target or can make working on the work target by controlling the operation of the end effector 44 while controlling the position of the end effector 44 or the direction of the axis of the end effector 44.

The robot 40 may further include sensors for detecting states of the components of the robot 40. The sensors may detect information regarding actual positions or postures of the components of the robot 40 or speeds or accelerations of the components of the robot 40. The sensors may detect forces acting on the components of the robot 40. The sensors may detect currents flowing in motors for driving the components of the robot 40 or torques of the motors. The sensors can detect information that is provided as results of actual operations of the robot 40. The robot control device 10 can recognize the results of the actual operations of the robot 40 by obtaining the detection results of the sensors. In other words, the robot control device 10 can obtain a state of the robot 40 based on the detection results of the sensors.

The robot control device 10 recognizes, based on an image of the mark 46 captured by the space information acquisition unit 20, the position of the mark 46 or the position of the end effector 44 to which the mark 46 is attached. The robot control device 10 further recognizes the state of the robot 40 based on the image of the mark 46 captured by the space information acquisition unit 20. The robot control device 10 can execute a calibration of the robot 40 by comparing the state of the robot 40 obtained based on the detection results of the sensors and the state of the robot 40 obtained based on the captured image of the mark 46.

<Space Information Acquisition Unit 20>

The space information acquisition unit 20 obtains space information regarding the operating space of the robot 40. The space information acquisition unit 20 may capture an image of the operating space and may obtain, as the space information, the image of the operating space. The space information acquisition unit 20 may capture an image of the object 50 present in the operating space as illustrated in FIG. 2. The space information acquisition unit 20 may be constituted as a camera. A 3D stereo camera captures an image of the object 50 present in the operating space, calculates the distance to the measurement point, as the depth, which is positioned on the surface of the object 50 present in the operating space, and generates the depth information. The space information acquisition unit 20 may be constituted as the 3D stereo camera. The space information acquisition unit 20 may be constituted as a LiDAR (light detection and ranging) sensor. The LiDAR sensor measures the distance to the measurement point positioned on the surface of the object 50 present in the operating space and generates the depth information. In other words, the space information acquisition unit 20 may obtain, as the space information, the depth information of the operating space. The space information acquisition unit 20 is not limited to the above-mentioned examples and may be constituted as suitable one of various other devices. The space information acquisition unit 20 may obtain, as the space information, various other types of information without being limited to the image of the operating space or the depth information. The space information acquisition unit 20 may include an image capturing element. The space information acquisition unit 20 may further include an optical system. The space information acquisition unit 20 may output the captured image of the operating space to the robot control device 10. The space information acquisition unit 20 may generate the depth information in the operating space of the robot 40 and may output the generated depth information to the robot control device 10. The space information acquisition unit 20 may generate point cloud information in the operating space of the robot 40 and may output the generated point cloud information to the robot control device 10. Thus, the space information acquisition unit 20 may output the space information in the form of point cloud data. Stated another way, the point cloud information may include the space information. The point cloud information represents a set of individual measurement points positioned on the surface of the object 50 present in the operating space and includes coordinate information or color information for each of the measurement points. The point cloud information can also be said as data representing the object 50 in a measurement space by using multiple points. With the space information being in the form of point cloud data, a data density can be made smaller than when the space information is based on initial data obtained by the space information acquisition unit 20.

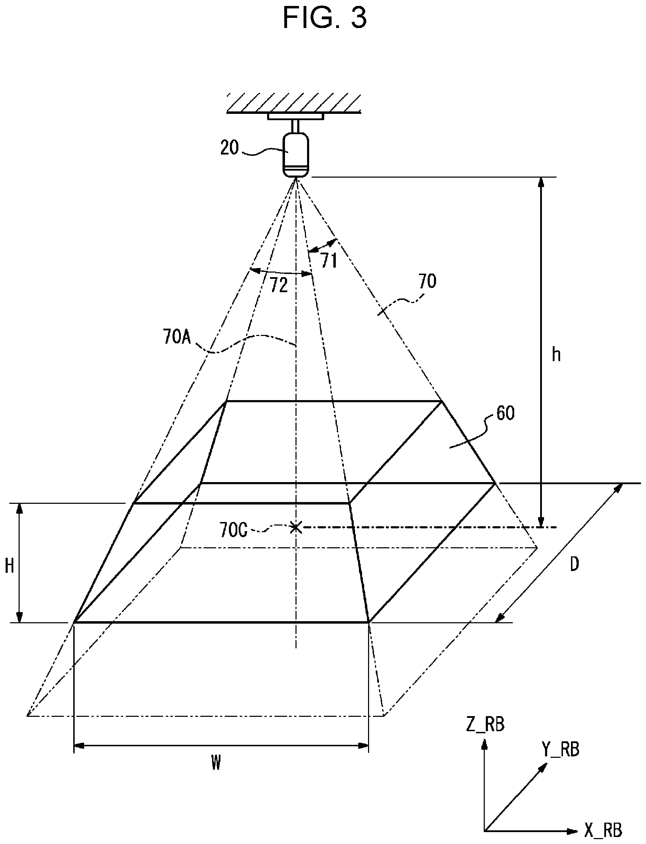

The space information acquisition unit 20 has an FOV (Field of View) 70 illustrated, by way of example, in FIG. 3 as a range denoted by two-dot-chain lines. The FOV 70 corresponds to an image capturing range (field angle) of the space information acquisition unit 20. The FOV 70 is determined based on a center axis 70A of the space information acquisition unit 20, a viewing angle 71 in a depth direction, and a viewing angle 72 in a width direction. The center axis 70A can also be said as being a set of points that are positioned at the center of the FOV 70 (field angle). In FIG. 3, the FOV 70 has a square pyramidal shape. The shape of the FOV 70 is not limited to a square pyramid and may have suitable one of various other shapes. The FOV 70 may include a center position 70C. The center position 70C is positioned on the center axis 70A. The center position 70C may be positioned at the center of a work range of the robot 40.

The space information acquisition unit 20 can capture an image of a range included in the FOV 70. An actual visual field size of the space information acquisition unit 20 is determined based on the FOV 70 of the space information acquisition unit 20 and the depth information. As described later, the robot control device 10 can obtain a position and a posture of the mark 46 on the robot 40 based on both the actual visual field size of the space information acquisition unit 20 and the image that is captured by the space information acquisition unit 20 and that includes the mark 46 on the robot 40. More specifically, by analyzing the captured image of the mark 46 according to a predetermined algorithm, the robot control device 10 can calculate the position and the posture of the mark 46 based on the image. The predetermined algorithm may include, for example, a mathematical formula, a table, or the like and/or a program specifying predetermined arithmetic processing. The predetermined algorithm may include a parameter for correcting a result calculated based on the image.

(Operation Examples of Robot Control Device 10)

The robot control device 10 operates the robot 40 to act on the work target, such as the object 50 present in the operating space, or operates the robot 40 to move while avoiding the object 50. The robot control device 10 operates the robot 40 to act on the work target or to move while avoiding the object 50 based on the image of the object 50 captured by the space information acquisition unit 20.

<Calibration>

The controller 11 of the robot control device 10 can obtain the state of the robot 40 based on the position and the posture of the mark 46 in the image captured by the space information acquisition unit 20 and can further obtain a positional relationship between the robot 40 and the object 50. On the other hand, the controller 11 also obtains the state of the robot 40 with sensors on the robot 40, such as encoders attached to the arm 42 and so on. The state of the robot 40 based on the detection by the sensors represents the position and the posture of the robot 40 with higher accuracy than the state of the robot 40 based on the image captured by the space information acquisition unit 20. Accordingly, the controller 11 can control the robot 40 in the operating space with higher accuracy by making the state of the robot 40 based on the image captured by the space information acquisition unit 20 agree with the state of the robot 40 based on the detection by the sensors on the robot 40. An operation of making the state of the robot 40 based on the image captured by the space information acquisition unit 20 agree with the state of the robot 40 detected by the sensors on the robot 40 is also referred to as a "calibration". More specifically, the controller 11 executes the calibration such that the (X, Y, Z) coordinate system of the space information acquisition unit 20 agrees with the (X_RB, Y_RB, Z_RB) coordinate system of the robot 40. The controller 11 may estimate a relative positional relationship between the coordinate system of the space information acquisition unit 20 and the coordinate system of the robot 40 and may make the coordinate system of the space information acquisition unit 20 agree with the coordinate system of the robot 40 based on the estimated relative positional relationship.

The controller 11 may execute the calibration by setting at least part of the FOV 70, illustrated in FIG. 3, as a calibration range. In this embodiment, the controller 11 executes the calibration in a calibration range 60 illustrated in FIG. 3. The calibration range 60 is denoted as a three-dimensional region indicated by two-dot-chain lines in FIG. 2. The calibration range 60 corresponds to a range in which the calibration of the robot 40 is executed. The calibration range 60 may include a work region of the robot 40. The calibration range 60 may be a range in which the work region of the robot 40 and the FOV 70 overlap.

Furthermore, the controller 11 sets a point for execution of the calibration in the calibration range by moving the mark 46 on the robot 40 into the calibration range 60. The point for execution of the calibration is also referred to as a "calibration position". The controller 11 moves the mark 46 on the robot 40 to the calibration position and instructs the space information acquisition unit 20 to capture the image of the mark 46. The controller 11 calculates the position and the posture of the mark 46 based on the captured image of the mark 46. The controller 11 corrects the position and the posture of the mark 46, calculated based on the image, such that the position and the posture of the mark 46 based on the image agree with the position and the posture of the mark 46 determined based on the detection results of the sensors on the robot 40. The correction of the position and the posture of the mark 46 based on the image corresponds to the calibration. The position and the posture of the mark 46 is also referred to as "tip position and posture". The calibration corresponds to the correction of the tip position and posture. The calibration position corresponds to a position where the tip position and posture is corrected.

In more detail, the controller 11 may execute the calibration as described below. The controller 11 generates control information of the robot 40 for moving the mark 46 on the robot 40 to the calibration position. The controller 11 operates the robot 40 in accordance with the control information and moves the mark 46 on the robot 40 to the calibration position. The controller 11 obtains the captured image of the mark 46 from the space information acquisition unit 20. The controller 11 calculates the position and the posture of the mark 46 based on the image. The position and the posture of the mark 46 calculated based on the image is also referred to as "image-based tip position and posture". The controller 11 calculates the position and the posture of the mark 46 determined based on the detection results of the sensors on the robot 40. The position and the posture of the mark 46 calculated based on the detection results of the sensors are also referred to as "sensor-based tip position and posture". The controller 11 compares the image-based tip position and posture and the sensor-based tip position and posture. The controller 11 corrects the image-based tip position and posture such that the image-based tip position and posture agree with the sensor-based tip position and posture. The controller 11 may correct an algorithm for calculating the image-based tip position and posture. The controller 11 may correct a parameter included in the algorithm or may correct a mathematic formula, a table, or a program. When multiple calibration positions are set, the controller 11 moves the robot 40 to each of the calibration positions, obtains the captured image of the mark 46 in each calibration position, and corrects the image-based tip position and posture.

While, in the above-described example, the calibration is executed on the position and posture of the mark 46, a target on which the calibration is to be executed is not limited to the position and the posture of the mark 46. In other words, the controller 11 may previously store a positional relationship between the position of the mark 46 and a position of the calibration target, given by part of the robot 40, on which the calibration is to be executed, and may calculate the position and the posture of the calibration target from the position and the posture of the mark 46 based on the image. Then, the calibration can be executed by comparing the calculated position and posture of the calibration target with the position and the posture of the calibration target based on the detection results of the sensors on the robot 40. Thus, the calibration can also be executed on the target other than the position and the posture of the mark 46. Moreover, while the calibration target is the tip position and posture of the robot 40 in the above-described example, the calibration target is not limited to the tip position and posture of the robot 40 insofar as the position and the posture of the target can be calculated.

<<Generation of Calibration Item>>

The controller 11 previously sets the calibration range 60 prior to executing the calibration. Furthermore, the controller 11 sets the calibration position that is included in the calibration range 60. The controller 11 sets the calibration position in the calibration range 60.

The controller 11 generates the control information of the robot 40 for causing the robot 40 to move to the tip position and posture specified in the calibration position. The controller 11 generates, as calibration items, information specifying the tip position and posture and a recognition result of the mark 46 on the robot 40 when the robot 40 has been moved to the calibration position. The calibration items are each information regarding, for example, coordinates. More specifically, the calibration item is, for example, coordinate information indicating the tip position and posture based on the detection results of the sensors on the robot 40 or coordinate information indicating the tip position and posture based on the recognition result of the mark 46 recognized by the space information acquisition unit 20 when the robot 40 has been moved to the calibration position.

The controller 11 executes the calibration such that the calibration item for the tip position and posture derived from the recognition result of the mark 46 agrees with the calibration item for the tip position and posture derived from the detection results of the sensors on the robot 40. In more detail, the controller 11 moves the robot 40 to the calibration position. The controller 11 obtains, from the space information acquisition unit 20, the recognition result of the mark 46 on the robot 40 when the robot 40 has been moved to the calibration position. The controller 11 calculates the relative positional relationship of the calibration item for the tip position and posture obtained as the recognition result of the mark 46 relative to the calibration item for the sensor-based tip position and posture of the robot 40. The relative positional relationship corresponds to differences in coordinates and angle between both the calibration items. The controller 11 corrects the coordinate system of the space information acquisition unit 20 to make it agree with the coordinate system of the robot 40 such that an error in the coordinates and an error in the angle corresponding to the relative positional relationship between both the calibration items come to zero or close to zero (namely, that the error becomes less than a predetermined value). Thus, the relative positional relationship can be calculated by making the recognition result of the mark 46 agree with the tip position and posture specified by the sensors on the robot 40 when the robot 40 has been moved to the calibration position. Alternatively, the controller 11 may make the tip position and posture specified by the sensors on the robot 40 agree with the tip position and posture recognized as the recognition result of the mark 46.

The controller 11 can set the calibration position by generating one or more calibration items. Conversely speaking, the calibration position corresponds to a position to which the robot 40 is moved to generate the calibration items. By applying the calibration items to the control of the robot 40, the controller 11 can move the robot 40 to the calibration position and can execute the calibration.

The controller 11 may generate the calibration position as described below.

The controller 11 obtains information regarding the actual visual field size of the space information acquisition unit 20 or information regarding the FOV 70 from the space information acquisition unit 20. The controller 11 sets the calibration range 60 based on both the actual visual field size or the FOV 70 of the space information acquisition unit 20 and the work region of the robot 40. The controller 11 may set the calibration range 60 based on a position of the object 50 in the operating space of the robot 40. The controller 11 may set the calibration range 60 based on the depth information or the point cloud information of the object 50, that information being detected by the space information acquisition unit 20. In FIG. 3, a shape of the calibration range 60 is set to a truncated square pyramid. The shape of the calibration range 60 is not limited to the truncated square pyramid and may be set to suitable one of various other shapes. The calibration range 60 may be specified by a height (H) corresponding to a length in a direction along the center axis 70A of the space information acquisition unit 20, a depth (D) corresponding to a length in the depth direction of a bottom surface of the truncated square pyramid, and a width (W) corresponding to a length in the width direction of the bottom surface.

Here, the viewing angle 71 in the depth direction is assumed to be expressed by u [rad]. The viewing angle 72 in the width direction is assumed to be expressed by v [rad]. A distance from the space information acquisition unit 20 to the center position 70C is assumed to be expressed by h. In this case, W and D can be calculated from the following formulae.

$$W = 2 \times h \times \tan(u/2)$$

$$D = 2 \times h \times \tan(v/2)$$

H can be determined as appropriate based on the operating space of the robot 40. H can be determined based on, for example, the height of the object 50.

The controller 11 moves the robot 40 to a first position. The first position is set on the center axis 70A. In an example, the first position may be set in advance. In this embodiment, it is assumed that the first position is set to, for example, the center position 70C. The controller 11 generates the control information for operating the robot 40 such that the position and the posture of the mask 46 based on the image of the mark 46 on the robot 40 become a predetermined tip position and posture in the first position. The controller 11 controls the robot 40 in accordance with the control information and moves the robot 40 to the first position. The first position may be the center position 70C of the FOV 70 illustrated in FIG. 3. The controller 11 obtains the image of the mark 46 when the robot 40 has been moved to the first position and calculates the position and the posture of the mask 46 as the image-based tip position and posture. Furthermore, the controller 11 calculates the sensor-based tip position and posture. With the image-based tip position and posture and the sensor-based tip position in the first position being references, the controller 11 generates, a position that is a candidate for the calibration position in the calibration range 60.

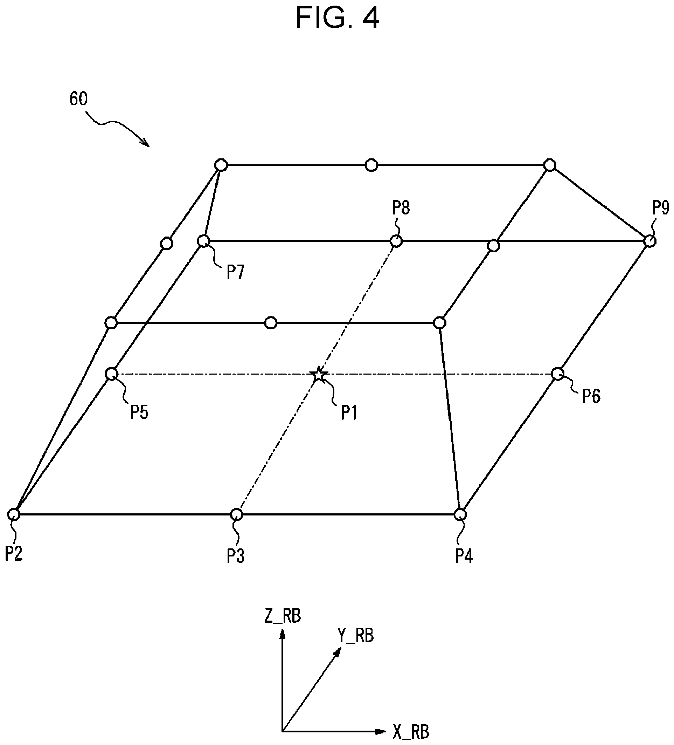

The controller 11 generates the position that is the candidate for the calibration position in the calibration range 60. In an example, as illustrated in FIG. 4, the controller 11 generates a first candidate position (P1) to a ninth candidate position (p9) in the calibration range 60. The number of the candidate positions is not limited to 9, and it may be 8 or less or 10 or more. The first candidate position (P1) is set in agreement with the first position. The candidate positions, such as P1 to P9, are also collectively referred to as "second positions". The number of the second positions (candidate positions) may be determined depending on the number of grid intervals in each of the W direction, the D direction, and the H direction of the calibration range 60. The number of the grid intervals represents the number by which the calibration range 60 is divided into parts in the direction of interest. In the example of FIG. 4, the number of the grid intervals (GW) in the W direction is set to 2. The number of the grid intervals (GD) in the D direction is set to 2. The number of the grid intervals (GH) in the H direction is set to 1. In the example of FIG. 4, in a bottom surface of the truncated square pyramid representing the calibration range 60, nine points (P1 to P9) including not only points (midpoints of sides) at which the sides in the W direction and the D direction are each divided into two parts, but also corners of the bottom surface are set as the second positions (candidate positions). P1 is set to the same point as the center position 70C. Coordinates of P2 to P9 are determined with the coordinates of P1 being a reference. When the coordinates of P1 are expressed by (P1X, P1Y, P1Z), the coordinates of P2 are expressed by (P1X - W/GW, P1Y - D/GD, P1Z). The coordinates of P3 are expressed by (P1X, P1Y - D/GD, P1Z). The coordinates of P4 are expressed by (P1X + W/GW, P1Y - D/GD, P1Z). The coordinates of P5 are expressed by (P1X - W/GW, P1Y, P1Z). The coordinates of P6 are expressed by (P1X + W/GW, P1Y, P1Z). The coordinates of P7 are expressed by (P1X - W/GW, P1Y + D/GD, P1Z). The coordinates of P8 are expressed by (P1X, P1Y + D/GD, P1Z). The coordinates of P9 are expressed by (P1X + W/GW, P1Y + D/GD, P1Z). Moreover, in an upper surface of the truncated square pyramid representing the calibration range 60, nine points including not only points (midpoints of sides) at which the sides in the W direction and the D direction are each divided into two parts, but also corners of the upper surface are set as the second positions (candidate positions).

With a simulation of the operation of the robot 40, the controller 11 estimates the state of the robot 40 when the robot 40 has been moved to each of the second positions (candidate positions). In other words, the controller 11 calculates the state of the robot 40 on an assumption of the robot 40 being moved to each second position (each candidate position). Then, the controller 11 determines for each of the second positions whether the calibration of the robot 40 can be made in the second position of interest.

The controller 11 determines that the calibration of the robot 40 can be executed and registers the second position (candidate position) as the calibration position if the state of the robot 40 on the assumption of the robot 40 being moved to the second position (candidate position) is a state of not being in contact with the object 50, a state of being within a joint movable range, and a state of not being at a singularity. When the controller 11 registers the second position (candidate position) as the calibration position, the controller 11 generates, as the calibration items, information specifying the tip position and posture and the recognition result of the mark 46 on the robot 40 when the robot 40 has been moved to the second position (candidate position). The controller 11 may determine for all the second positions (candidate positions) collectively whether they are registered as the calibration positions. The controller 11 may determine for each of the second positions (candidate positions) whether the second position of interest is registered as the calibration position. When a numerical value representing a joint angle of the robot 40 is within the joint movable range, the controller 11 may determine that the robot 40 is in a state free from restriction on the joint. When the numerical value representing the joint angle of the robot 40 is outside the joint movable range, the controller 11 may determine that the robot 40 is in a state under restriction on the joint.

The singularity corresponds to a posture in which the robot 40 can no longer be controlled from the structural viewpoint of the robot 40. When a path along which the robot 40 is to be operated includes the singularity, the robot 40 moves at a high speed (runs away out of control) near the singularity and then stops at the singularity. The robot 40 has three types (1) to (3) of singularities as follows:

(1) A point outside the work region when the robot 40 is controlled to move up to a position near an outer side limit of the work region. (The work region corresponds to the operating space of the robot 40).
(2) A point at which the robot 40 is controlled toward a position right above or below a robot base even with the point positioned within the work region.
(3) A point (wrist aligned singularity) at which an angle of a next joint from a frontmost joint of the arm 42 of the robot 40 is zero or 180 degrees.

When a numerical value representing the state of the robot 40 agrees with a numerical value representing the state of being at the singularity, the controller 11 may determine that the robot 40 is in the singularity state. When a difference between the numerical value representing the state of the robot 40 and the numerical value representing the state of being at the singularity is less than a predetermined value, the controller 11 may determine that the robot 4 is in the singularity state. The numerical value representing the state of the robot 40 may include, for example, the joint angle of the arm 42 or the torque of the motor for driving the robot 40.

As described above, the controller 11 sets the calibration range 60 and sets the calibration position in the calibration range 60. The controller 11 can generate the calibration items as the information specifying the tip position and posture of the robot 40 and the recognition result of the mark 46 on the robot 40 when the robot 40 has been moved to the calibration position.

(Example of Procedures of Robot Control Method)

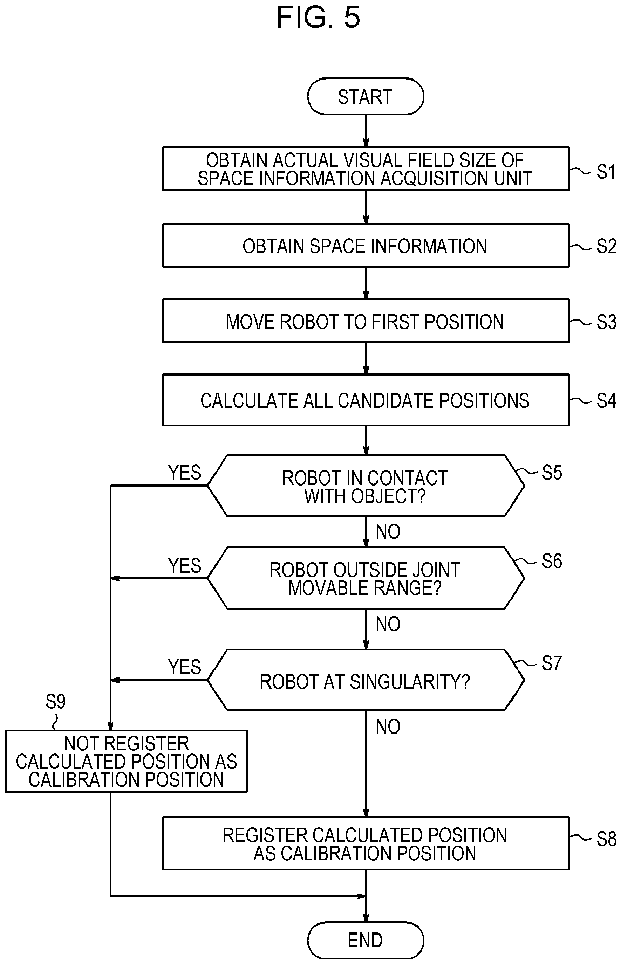

The controller 11 of the robot control device 10 may execute the robot control method including procedures of a flowchart illustrated in FIG. 5. The robot control method may be implemented as a robot control program that is executed by a processor constituting the controller 11. The robot control program may be stored in a non-transitory computer-readable medium.

The controller 11 obtains the information regarding the actual visual field size or the FOV 70 of the space information acquisition unit 20 (step S1). The controller 11 obtains the space information of the captured image of the mark 46 on the robot 40 (step S2). The controller 11 moves the robot 40 to the first position (step S3).

The controller 11 calculates all the candidate positions (step S4). The controller 11 determines whether, in the state of the robot 40 on an assumption that the robot 40 has been moved to each of the positions calculated in the procedure of step S4 one by one, the robot 40 comes into contact with the object 50 in the operating space of the robot 40 in the position of interest (step S5). If the robot 40 comes into contact with the object 50 in the position of interest on the assumption that the robot 40 has been moved to each of the positions calculated in the procedure of step S4 one by one (step S5: YES), the controller 11 advances to the procedure of step S9. If the robot 40 does not come into contact with the object 50 in the position of interest on the assumption that the robot 40 has been moved to each of the positions calculated in the procedure of step S4 one by one (step S5: NO), the controller 11 determines whether, in the state of the robot 40 on the assumption that the robot 40 has been moved to each of the positions calculated in the procedure of step S4 one by one, the robot 40 comes into a state of being outside the joint movable range of the robot 40 in the position of interest (step S6). If the robot 40 comes into the state of being outside the joint movable range of the robot 40 in the position of interest on the assumption that the robot 40 has been moved to each of the positions calculated in the procedure of step S4 one by one (step S6: YES), the controller 11 advances to the procedure of step S9. If the robot 40 does not come into the state of being outside the joint movable range of the robot 40 in the position of interest on the assumption that the robot 40 has been moved to each of the positions calculated in the procedure of step S4 one by one (step S6: NO), the controller 11 determines whether, in the state of the robot 40 on the assumption that the robot 40 has been moved to each of the positions calculated in the procedure of step S4 one by one, the robot 40 comes into the singularity state in the position of interest (step S7). If the robot 40 comes into the singularity state in the position of interest on the assumption that the robot 40 has been moved to each of the positions calculated in the procedure of step S4 one by one (step S7: YES), the controller 11 advances to the procedure of step S9. If the robot 40 does not come into the singularity state in the position of interest on the assumption that the robot 40 has been moved to each of the positions calculated in the procedure of step S5 one by one (step S7: NO), the controller 11 can determine that the robot 40 does not come into contact with the object 50, does not go out of the joint movable range, and does not come into the singularity state even when the robot 40 is moved to the relevant each one of the positions calculated in the procedure of step S5. The controller 11 generates, as the calibration position, the information specifying the tip position and posture and the recognition result of the mark 46 on the robot 40 when the robot 40 has been moved to the relevant each one of the positions calculated in the procedure of step S4 (step S8). After the end of the procedure of step S8, the controller 11 ends the execution of the procedures of the flowchart illustrated in FIG. 5. If at least one of the following cases occurs on the assumption that the robot 40 has been moved to each of the positions calculated in the procedure of step S5 one by one, namely the case (step S5: YES) in which the robot 40 comes into contact with the object 50, the case (step S6: YES) in which the robot 40 comes into the state of being outside the joint movable range, and the case (step S7: YES) in which the robot 40 comes into the singularity state, the controller 11 does not register, as the calibration position, the relevant each one of the positions calculated in the procedure of step S4 (step S9). After the end of the procedure of step S9, the controller 11 ends the execution of the procedures of the flowchart illustrated in FIG. 5.

For all the positions calculated in the procedure of step S4, the controller 11 may collectively determine whether all those positions are registered as the calibration positions. For all the positions calculated in the procedure of step S5, the controller 11 may determine for each of the positions whether the position of interest is registered as the calibration position.

(Recapitulation)

As described above, with the robot control device 10 and the robot control method according to the embodiments, the calibration position is generated based on the space information, such as the image captured by the space information acquisition unit 20. Thus, the calibration position can be generated without any visual work of an operator. In other words, the calibration position can be automatically generated. The calibration range 60 is a range including the calibration position. As a result, the first calibration range 60 can be simply set.

With the robot control device 10 and the robot control method according to the embodiments, the simulation is executed based on the actual visual field size or the FOV 70 of the space information acquisition unit 20. The calibration position can be generated with the simulation while avoiding collision against an obstacle, such as the object 50 in the operating space of the robot 40. Furthermore, the calibration position can be generated with the simulation in a fashion of not causing the robot 40 to come into the state of going out of the joint movable range. Moreover, the calibration position can be generated with the simulation in a fashion of not causing the robot 40 to come into the singularity state. Thus, the calibration position can be generated without actually moving the robot 40. As a result, the calibration position can be efficiently generated.

While the embodiments according to the present disclosure have been described with reference to the drawings and the examples, it is to be noted that those skilled in the art can variously vary or alter the embodiments on the basis of the present disclosure. Hence it is to be noted that those variations or alterations also fall within the scope of the present disclosure. For example, unless there is no theoretical contradiction, the functions included in various components and so on can be rearranged in such a manner as combining multiple components into one or dividing any of the components into multiple parts.

All the configuration requirements described in the present disclosure and/or all the methods or all the processing steps disclosed herein can be implemented in optional combinations expect for the case in which features to be combined are mutually exclusive. Furthermore, various features described in the present disclosure can be replaced with alternative features that are effective for the same purposes, equivalent purposes, or similar purposes unless explicitly denied. Accordingly, unless explicitly denied, the various features disclosed herein are merely examples of a series of the same or equivalent comprehensive features.

In addition, embodiments according to the present disclosure are not limited to any of the concrete configurations of the above-described embodiments. The embodiments according to the present disclosure can be expanded to all the novel features described in the present disclosure or combinations thereof, or to all the novel methods or processing steps described in the present disclosure or combinations thereof.

REFERENCE SIGNS

1     robot control system
10    robot control device (11: controller, 12: storage)
20    space information acquisition unit
40    robot (42: arm, 44: end effector, 46: mark)
50    object
60    calibration range
70    FOV (70A: center axis , 70C: center position, 71: viewing angle in depth direction, 72: viewing angle in width direction)

**Claims**

1.  A robot control device comprising a controller configured to control a robot,

    wherein the controller
    obtains an actual visual field size of a space information acquisition unit configured to capture an image of an operating space of the robot and space information obtained by the space information acquisition unit;
    sets a predetermined first position based on the actual visual field size and the space information; and
    generates a calibration position of the robot based on the first position and the actual visual field size.

2. The robot control device according to claim 1,

   wherein the controller
   calculates a state of the robot on an assumption that the robot is moved to the calibration position; and
   determines whether a calibration of the robot can be executed.

3. The robot control device according to claim 1 or 2,

   wherein the controller
   further calculates a position of the object present in the operating space based on the actual visual field size of the space information acquisition unit and the space information obtained by the space information acquisition unit; and
   moves the robot to the calibration position when the robot is in a state of not being in contact with the object present in the operating space, a state of not being on an outer side of a joint movable range, and a state of not being at a singularity.

4. A robot control system comprising:

   the robot control device according to any one of claims 1 to 3,
   the robot, and
   the space information acquisition unit.

5. A robot control method comprising:

   obtaining, by a controller configured to control a robot, an actual visual field size of a space information acquisition unit configured to capture an image of an operating space of the robot and the image captured by the space information acquisition unit;
   setting, by the controller, a predetermined first position based on the actual visual field size of the space information acquisition unit and the image captured by the space information acquisition unit; and
   generating, by the controller, a calibration position of the robot based on the first position and the actual visual field size of the space information acquisition unit.

# FIG. 1

1

## 10
### ROBOT CONTROL DEVICE

11 — CONTROLLER

12 — STORAGE

20
SPACE INFORMATION
ACQUISITION UNIT

ROBOT

40

FIG. 2

# FIG. 3

# FIG. 4

# FIG. 5

```
                    ┌─────────────┐
                    │    START    │
                    └──────┬──────┘
                           │
                           ▼
        ┌──────────────────────────────────────┐
        │ OBTAIN ACTUAL VISUAL FIELD SIZE OF    │── S1
        │ SPACE INFORMATION ACQUISITION UNIT    │
        └──────────────────┬───────────────────┘
                           │
                           ▼
        ┌──────────────────────────────────────┐
        │      OBTAIN SPACE INFORMATION         │── S2
        └──────────────────┬───────────────────┘
                           │
                           ▼
        ┌──────────────────────────────────────┐
        │      MOVE ROBOT TO FIRST POSITION     │── S3
        └──────────────────┬───────────────────┘
                           │
                           ▼
        ┌──────────────────────────────────────┐
        │      CALCULATE ALL CANDIDATE POSITIONS│── S4
        └──────────────────┬───────────────────┘
                           │
                           ▼
   YES  ╱────────────────────────────────────╲  S5
   ◄────│   ROBOT IN CONTACT WITH OBJECT?     │
        ╲────────────────────┬────────────────╱
                           │ NO
                           ▼
   YES  ╱────────────────────────────────────╲  S6
   ◄────│   ROBOT OUTSIDE JOINT MOVABLE RANGE?│
        ╲────────────────────┬────────────────╱
                           │ NO
                           ▼
   YES  ╱────────────────────────────────────╲  S7
   ◄────│   ROBOT AT SINGULARITY?             │
        ╲────────────────────┬────────────────╱
                           │ NO
   S9                        │
   ┌───────────────────┐     │
   │   NOT REGISTER    │     │
   │ CALCULATED        │     │
   │ POSITION AS       │     ▼
   │ CALIBRATION       │  ┌──────────────────────────────┐
   │ POSITION          │  │ REGISTER CALCULATED POSITION  │── S8
   └─────────┬─────────┘  │    AS CALIBRATION POSITION    │
             │            └──────────────┬───────────────┘
             │                           │
             └───────────────┬───────────┘
                             ▼
                      ┌─────────────┐
                      │     END     │
                      └─────────────┘
```

## INTERNATIONAL SEARCH REPORT

| International application No. |
|---|
| **PCT/JP2022/030011** |

**A. CLASSIFICATION OF SUBJECT MATTER**

*B25J 9/10*(2006.01)i; *B25J 13/08*(2006.01)i; *G05B 19/19*(2006.01)i; *G05B 19/404*(2006.01)i; *G05B 19/4061*(2006.01)i
FI: B25J9/10 A; B25J13/08 A; G05B19/404 H; G05B19/19 H; G05B19/4061 Z

According to International Patent Classification (IPC) or to both national classification and IPC

**B. FIELDS SEARCHED**

Minimum documentation searched (classification system followed by classification symbols)

B25J9/10; B25J13/08; G05B19/19; G05B19/404; G05B19/4061

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-111166 A (FANUC LTD) 19 July 2018 (2018-07-19) paragraphs [0022]-[0049], [0072]-[0082], fig. 1-11B | 1-2, 4-5 |
| Y | | 3 |
| Y | CN 111195915 A (INSTITUTE OF INTELLIGENT VIDEO AUDIO TECHNOLOGY, LONGGANG SHENZHEN) 26 May 2020 (2020-05-26) paragraph [0062], fig. 1-7 | 3 |
| A | WO 2015/129473 A1 (SONY CORPORATION) 03 September 2015 (2015-09-03) entire text, all drawings | 1-5 |
| A | JP 2018-114578 A (FANUC LTD) 26 July 2018 (2018-07-26) entire text, all drawings | 1-5 |
| A | US 2020/0298403 A1 (COGNIBOTICS AB) 24 September 2020 (2020-09-24) entire text, all drawings | 1-5 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2022** | **25 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/030011**

| Patent document cited in search report | | | Publication date (day/month/year) | Patent family member(s) | | | Publication date (day/month/year) |
|---|---|---|---|---|---|---|---|
| JP | 2018-111166 | A | 19 July 2018 | US | 2018/0194008 | A1 | |
| | | | | paragraphs [0043]-[0070], [0094]-[0104], fig. 1-11B | | | |
| | | | | DE | 102018200154 | A1 | |
| | | | | CN | 108297095 | A | |
| CN | 111195915 | A | 26 May 2020 | (Family: none) | | | |
| WO | 2015/129473 | A1 | 03 September 2015 | US | 2017/0066131 | A1 | |
| | | | | entire text, all drawings | | | |
| | | | | EP | 3112096 | A1 | |
| | | | | CN | 106029308 | A | |
| JP | 2018-114578 | A | 26 July 2018 | US | 2018/0200886 | A1 | |
| | | | | entire text, all drawings | | | |
| | | | | DE | 102018200240 | A1 | |
| | | | | CN | 108326876 | A | |
| US | 2020/0298403 | A1 | 24 September 2020 | WO | 2017/167687 | A2 | |
| | | | | EP | 3436876 | A2 | |
| | | | | TW | 201736065 | A | |
| | | | | CA | 3019438 | A1 | |
| | | | | CN | 109196429 | A | |
| | | | | DK | 3436876 | T3 | |

Form PCT/ISA/210 (patent family annex) (January 2015)

**EP 4 382 261 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021128475 A

- JP 2018111166 A